# EUROPEAN PATENT SPECIFICATION

(11) **EP 2 719 917 B1**
(45) Date of publication and mention of the grant of the patent: **18.07.2018**
(21) Application number: 12800951.1
(22) Date of filing: 29.05.2012
(51) Int. Cl.: F16F 9/53

(54) **MAGNETORHEOLOGICAL FLUID SHOCK ABSORBER**
MAGNETORHEOLOGISCHER DÄMPFER
AMMORTISSEUR À FLUIDE MAGNETORHEOLOGIQUE

(30) Priority: 13.06.2011 JP 2011131258
(43) Date of publication of application: 16.04.2014
(73) Proprietor: KYB Corporation, Tokyo 105-6111 (JP)
(72) Inventor: SAITO, Keiji, Tokyo 105-6111 (JP); SHIMADA, Miho, Tokyo 105-6111 (JP)
(74) Representative: Grünecker Patent- und Rechtsanwälte PartG mbB
(86) International application number: PCT/JP2012/063712
(87) International publication number: WO 2012/172963

(56) References cited:
- EP-A1- 2 278 185
- JP-A- 5 052 235
- JP-A- 5 052 235
- JP-A- 57 161 330
- JP-A- 57 161 330
- JP-A- 60 121 948
- JP-A- 2005 291 338
- JP-A- 2005 333 762
- JP-U- H0 541 357

## Description

### TECHNICAL FIELD

This invention relates to a magnetorheological fluid shock absorber that uses a magnetorheological fluid having an apparent viscosity that is varied by an action of a magnetic field.

### BACKGROUND ART

A damping force of a shock absorber installed in a vehicle such as an automobile may be varied by applying a magnetic field to a flow passage through which a magnetorheological fluid passes in order to vary an apparent viscosity of the magnetorheological fluid.

JP2007-239982A discloses a magnetorheological fluid shock absorber in which a permanent magnet is attached to respective axial direction end portions of a cylinder in which a magnetorheoloigcal fluid is sealed. In this magnetorheological fluid shock absorber, a yoke material is provided on an outer periphery of the cylinder, and a piston and a part of a piston rod are formed from a ferromagnetic material. In this magnetorheological fluid shock absorber, when the piston is positioned in a neutral region, a magnetic force of the permanent magnet does not act on the magnetorheological fluid. When the piston strokes beyond the neutral region, on the other hand, a magnetic circuit is formed from the permanent magnet via the piston rod, the piston, and the yoke material. As a result, the magnetic force of the permanent magnet acts on the magnetorheological fluid between the piston and the cylinder, leading to an increase in a viscosity of the magnetorheological fluid and a corresponding increase in a damping coefficient. JP2005291338 A discloses a damper suitable for a vehicle and capable of adjusting the magnitude of a damping force in relation to a travel position.

### SUMMARY OF INVENTION

With the magnetorheological fluid shock absorber described in JP2007-239982A, however, when the piston strokes beyond the neutral region, the magnetic force of the permanent magnet acts on the magnetorheological fluid, causing the damping coefficient to vary greatly. In this magnetorheological fluid shock absorber, therefore, the viscosity of the magnetorheological fluid, or in other words the damping coefficient, varies in steps between a time at which the piston is positioned in the neutral region and a time at which the piston passes the neutral position. Further, the magnetorheological fluid shock absorber is structured such that a periphery of a magnetic field generation device is covered by the magnetorheological fluid, and therefore a magnetic field generated by the magnetic field generation device disperses such that magnetism cannot be applied to the magnetorheological fluid efficiently.

This invention has been designed in consideration of the problems described above, and an object thereof is to provide a magnetorheological fluid shock absorber in which a magnet is attached to a cylinder, and with which magnetism is applied efficiently so that a damping coefficient is varied continuously relative to a stroke amount of a piston.

According to one aspect of this invention, a magnetorheological fluid shock absorber that uses a magnetorheological fluid having a viscosity that is varied by an action of a magnetic field is provided. The magnetorheological fluid shock absorber includes: a tubular cylinder formed from a non-magnetic material, in which the magnetorheological fluid is sealed; a piston formed from a non-magnetic material and disposed in the cylinder to be free to slide at an interval, through which the magnetorheological fluid can pass, relative to an inner periphery of the cylinder; a piston rod to which the piston is connected; and a magnet portion attached to the cylinder in order to apply a magnetic field to an interior of the cylinder. The magnet portion includes a pair of permanent magnets that are respectively formed in an arc shape having an inner peripheral shape that aligns with an outer periphery of the cylinder, magnetized in a circumferential direction, and disposed so as to face each other with a clearance about a central axis of the cylinder. The magnetorheological fluid shock absorber further comprising a support member formed from a non-magnetic material, the support member supporting and fixing the pair of permanent magnets so that the pair of permanent magnets faces each other with the clearance.

The details as well as other features and advantages of this invention are set forth in the remainder of the specification and are shown in the accompanying drawings.

### BRIEF DESCRIPTION OF DRAWINGS

FIG. 1 is a sectional view of a magnetorheological fluid shock absorber according to a first embodiment of this invention.
FIG. 2A is a IIA-IIA sectional view of FIG. 1.
FIG. 2B is a view illustrating a permanent magnet of the magnetorheological fluid shock absorber according to the first embodiment of this invention.
FIG. 3 is a graph illustrating an action of the magnetorheological fluid shock absorber according to the first embodiment of this invention.
FIG. 4A is a sectional view showing a piston, a cylinder, and a magnet portion of a magnetorheological fluid shock absorber according to a second embodiment of this invention.
FIG. 4B is a view illustrating a permanent magnet of the magnetorheological fluid shock absorber according to the second embodiment of this invention.

### DESCRIPTION OF EMBODIMENTS

Embodiments of this invention will be described below with reference to the figures.

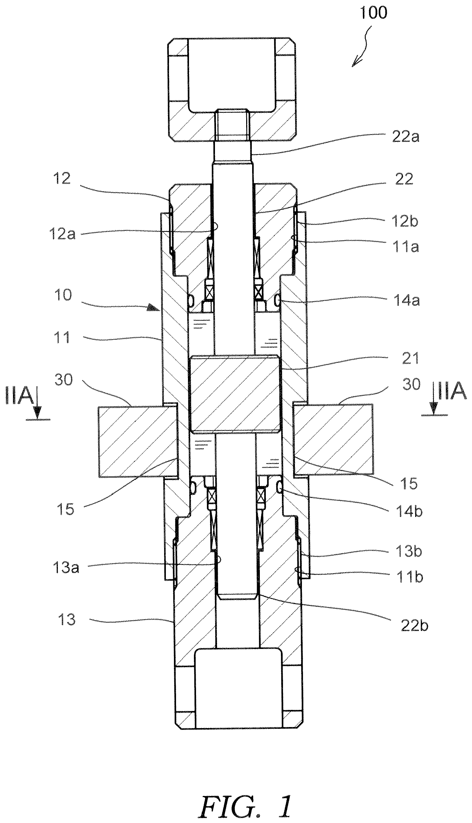

First, referring to FIG. 1, an overall configuration of a magnetorheological fluid shock absorber 100 according to a first embodiment of this invention will be described. FIG. 1 is a sectional view of the magnetorheological fluid shock absorber 100.

The magnetorheological fluid shock absorber 100 is a damper in which a damping coefficient relative to a force applied in an axial direction can be varied using a magnetorheological fluid that is varied in viscosity by an action of a magnetic field. The magnetorheological fluid shock absorber 100 is formed such that the damping coefficient thereof varies proportionally in accordance with a stroke amount of a piston 21.

The magnetorheological fluid shock absorber 100 includes a tubular cylinder 10 having a magnetorheological fluid sealed into an inner periphery thereof, the piston 21, which is disposed in the cylinder 10 to be free to slide in an axial direction of the cylinder 10, a piston rod 22 to which the piston 21 is connected, and a magnet portion 30 that is fixed to an outer periphery of the cylinder 10 in order to apply a magnetic field to an interior of the cylinder 10.

The magnetorheological fluid sealed in the cylinder 10 is a fluid formed by dispersing ferromagnetic microparticles through a fluid such as oil, and has an apparent viscosity that is varied by an action of a magnetic field. The viscosity of the magnetorheological fluid varies in accordance with an intensity of the applied magnetic field, and reaches a minimum when no magnetic field effect is present.

The cylinder 10 includes a cylindrical portion 11 formed in a cylindrical shape having opening portions at either end, and a head member 12 and a bottom member 13 respectively attached to the opening portions at either end of the cylindrical portion 11.

The cylindrical portion 11 includes a screw portion 11a formed on an inner periphery in one opening portion, and a screw portion 11b formed on an inner periphery in the other opening portion.

A screw portion 12b that is screwed to the screw portion 11a of the cylindrical portion 11 is formed on an outer periphery of the head member 12. A seal member 14a is provided between the inner periphery of the cylindrical portion 11 and the outer periphery of the head member 12 so that the magnetorheological fluid is sealed within the cylinder 10. A hole 12a for inserting the piston rod 22 is formed in the head member 12.

Similarly, a screw portion 13b that is screwed to the screw portion 11b of the cylindrical portion 11 is formed on an outer periphery of the bottom member 13. A seal member 14b is provided between the inner periphery of the cylindrical portion 11 and the outer periphery of the bottom member 13 so that the magnetorheological fluid is sealed within the cylinder 10. A hole 13a for inserting the piston rod 22 is formed in the bottom member 13.

The cylinder 10 is formed from a non-magnetic material. In so doing, the cylinder 10 can be prevented from forming a magnetic path, and therefore a magnetic field can be applied efficiently from the magnet portion 30 to the magnetorheological fluid sealed in the cylinder 10.

The cylinder 10 includes an annular recessed portion 15 formed on the outer periphery of the cylindrical portion 11 to be thinner than other parts of the cylinder 10. The magnet portion 10 is fitted around the recessed portion 15.

The piston 21 is formed in a columnar shape having a smaller outer diameter than an inner diameter of the cylindrical portion 11 of the cylinder 10. In other words, the piston 21 is formed at an annular interval, through which the magnetorheological fluid can pass, relative to the inner periphery of the cylindrical portion 11 of the cylinder 10.

When the piston 21 slides through the cylinder 10 in the axial direction, the magnetorheological fluid passes through the interval between the piston 21 and the cylinder 10. The annular interval between the piston 21 and the cylinder 10 serves as a throttle by which the magnetorheological fluid shock absorber 100 generates a damping force.

The piston 21 is formed from a non-magnetic material. In so doing, the magnetic field from the magnet portion 30 can be prevented from acting directly on the piston 21, and an increase in friction occurring when the piston 21 is pulled to one side can be prevented.

The piston rod 22 is formed coaxially with the piston 21, and penetrates a center of the piston 21. The piston rod 22 is formed integrally with the piston 21. The piston rod 22 may be formed separately from the piston 21 and joined thereto by a screw or the like.

One end portion 22a of the piston rod 22 penetrates the hole 12a in the head member 12 and extends to the outside of the cylinder 10 while being supported by the head member 12 to be free to slide. Another end portion 22b of the piston rod 22 penetrates the hole 13a in the bottom member 13 and is supported by the bottom member 13 to be free to slide.

By supporting the piston rod 22 to be free to slide using the head member 12 and the bottom member 13 in this manner, the piston rod 22 can slide in the axial direction without deviating in a radial direction within the cylinder 10 even though the annular interval is formed between the outer periphery of the piston 21 and the inner periphery of the cylinder 10.

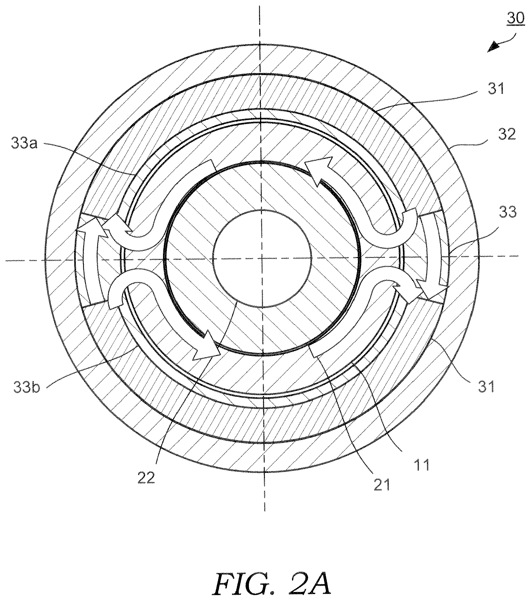

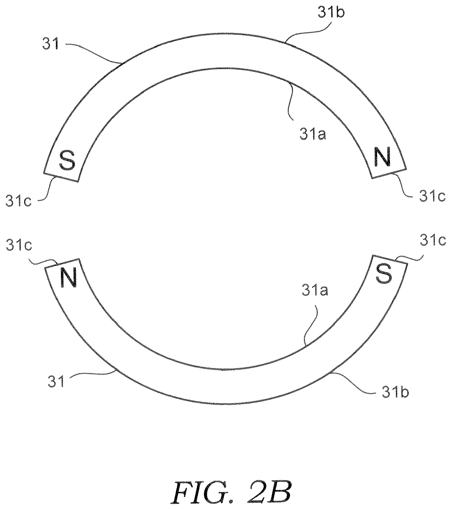

Next, referring to FIGS. 2A and 2B, the magnet portion 30 will be described. FIG. 2A is a IIA-IIA sectional view of FIG. 1. FIG. 2B is a view illustrating a permanent magnet 31 of the magnetorheological fluid shock absorber 100 according to the first embodiment of this invention.

As shown in FIG. 2A, the magnet portion 30 is formed with an annular cross-section. The magnet portion 30 is fitted around the recessed portion 15 of the cylinder 10. The recessed portion 15 is formed to be thinner than the other parts of the cylinder 10. As a result, the magnetic field from the magnet portion 30 is not prevented from acting on the magnetorheological fluid sealed in the cylinder 10.

The magnet portion 30 is constituted by a pair of permanent magnets 31, a support member 33 supporting the permanent magnets 31, and an annular ring member 32 fitted around the permanent magnets 31 and the support member 33.

Each permanent magnet 31 is a C-shaped segment magnet having an arc shape that is surrounded by an inner peripheral surface 31a constituted by a partial arc of a first circumference centering on an identical axis to an axial center of the cylinder 10, an outer peripheral surface 31b constituted by a partial arc of a second circumference that is concentric with the first circumference but has a larger diameter than the first circumference, and a pair of side portions 31c linking the inner peripheral surface 31a to the outer peripheral surface 31b. The pair of permanent magnets 31 are formed in an identical shape and **disposed so that the magnetic poles of the pair of permanent magnets 31 respectively oppose identical poles.**

As shown in FIG. 2B, the permanent magnets 31 are magnetized by groups of magnetic poles in a circumferential direction. In the example shown in FIG. 2B, the permanent magnets 31 are magnetized to an N pole in one side portion 31c in the circumferential direction, and magnetized to an S pole in another side portion 31c. In the magnet portion 30, the pair of permanent magnets 31 are disposed in rotational symmetry relative to the central axis of the cylinder 10. In other words, the magnetic poles of the pair of permanent magnets 31 respectively oppose opposite poles.

More specifically, the magnetic pole on the side portion 31c of one of the permanent magnets 31 is an N pole, and the magnetic pole on the same side portion 31c of the opposing permanent magnet 31 is an S pole. Further, the magnetic pole on the other side portion 31c of the first permanent magnet 31 is an S pole, and the magnetic pole on the same side portion 31c of the opposing permanent magnet 31 is an N pole.

An inner peripheral side of the support member 33 is formed in a cylindrical shape that aligns with the periphery of the recessed portion 15 formed in an annular shape. A groove portion 33a and a groove portion 33b for fixing the permanent magnets 31 to a circumferential outer form are formed on an outer peripheral side of the support member 33. When the permanent magnets 31 are fixed respectively to the groove portion 33a and the groove portion 33b, the outer periphery of the support member 33 forms an identical circle to the aforesaid second circumference.

The support member 33 is formed from a non-magnetic material, similarly to the cylinder 10. In so doing, the support member 33 is prevented from forming a magnetic path, and therefore the magnetic field from the magnet portion 30 is applied to the magnetorheological fluid efficiently.

The annular ring member 32 is fitted to the outer periphery of the support member 33. The ring member 32 is fitted tightly to the outer periphery of the support member 33 in a condition where the permanent magnets 31 are fixed respectively to the groove portion 33a and the groove portion 33b. The ring member 32 is formed from a non-magnetic material. The ring member 32 is attached to prevent impurities from adhering to the permanent magnets 31. Hence, the ring member 32 is not limited to a tubular non-magnetic member, and may be applied by painting, coating, or the like.

The pair of permanent magnets 31 are fixed by the support member 33 so as to be removed from each other. In other words, a central angle of the inner peripheral surface 31a and the outer peripheral surface 31b of the permanent magnet 31 is set at less than 180°. Further, the outer peripheral surface 31b of the permanent magnet 31 closely contacts an inner peripheral surface of the ring member 32.

With this configuration, the magnet portion 30 generates a magnetic field in a direction indicated by an arrow in FIG. 2A. More specifically, by disposing the pair of permanent magnets 31, a magnetic field is generated in a direction following an outer edge of the cylinder 10 by the mutually opposing magnetic poles, particularly in the vicinity of the side portions 31c. The magnetic field acts on the magnetorheological fluid existing in the interval between the piston 21 and the cylinder 10, and as a result, the viscosity of the magnetorheological fluid can be increased.

The magnet portion 30 is disposed to correspond to a position of the piston 21 when the piston rod 22 is furthest advanced into the cylinder 10. Hence, the viscosity of the magnetorheological fluid in the cylinder 10 differs according to the axial direction position. More specifically, the ferromagnetic microparticles gather in the vicinity of the magnet portion 30 due to an increase in the effect of the magnetic field, and therefore the viscosity of the magnetorheological fluid in the cylinder 10 increases gradually toward the magnet portion 30. Away from the magnet portion 30, on the other hand, the effect of the magnetic field decreases, leading to a reduction in the viscosity of the magnetorheological fluid in the cylinder 10.

Hence, when the piston rod 22 strokes in an advancement direction into the cylinder 10, the effect of the magnetic field generated by the magnet portion 30 on the magnetorheological fluid passing through the interval between the piston 21 and the cylinder 10 gradually increases. Therefore, the apparent viscosity of the magnetorheological fluid increases in accordance with the stroke of the piston rod 22 in the advancement direction into the cylinder 10. Accordingly, the damping coefficient of the magnetorheological fluid shock absorber 100 increases as the piston rod 22 advances into the cylinder 10, and as a result, the damping coefficient can be varied continuously in accordance with the stroke amount of the piston 21.

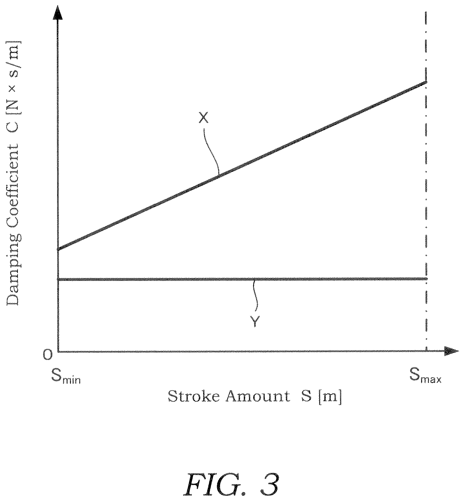

Next, referring to FIG. 3, actions of the magnetorheological fluid shock absorber 100 will be described.

In FIG. 3, the abscissa shows a stroke amount S [m], which is an amount by which the piston rod 22 advances into the cylinder 10, while the ordinate shows a damping coefficient C [N × s/m] of the magnetorheological fluid shock absorber 100. In FIG. 3, a straight line X represents the damping coefficient C of the magnetorheological fluid shock absorber 100, while a straight line Y represents the damping coefficient C in a case where the magnetorheological fluid shock absorber 100 is not provided with the magnet portion 30 such that a magnetic field is not applied to the magnetorheological fluid in the cylinder 10.

When the magnet portion 30 is not provided, the annular interval serving as the throttle between the piston 21 and the cylinder 10 remains constant at all times, even when the piston rod 22 advances into the cylinder 10. Further, since the magnet portion 30 is not provided, the magnetorheological fluid in the cylinder 10 is not affected by a magnetic field, and therefore the viscosity of the magnetorheological fluid in the cylinder 10 remains constant regardless of the stroke amount of the piston rod 22. Hence, as shown by the straight line Y, the damping coefficient C in this case takes a constant value at all times relative to variation in the stroke amount S.

In the magnetorheological fluid shock absorber 100, on the other hand, as shown by the straight line X, the damping coefficient C is at a minimum when the stroke amount is Sₘᵢₙ, i.e. when the piston rod 22 is furthest withdrawn from the cylinder 10. Even when the stroke amount is Sₘᵢₙ, however, the magnetic field generated by the magnet portion 30 affects the magnetorheological fluid in the cylinder 10 such that the ferromagnetic microparticles are aligned, and therefore the damping coefficient C is larger than that of the case in which the magnet portion 30 is not provided.

As the piston rod 22 gradually advances into the cylinder 10 from the stroke amount Sₘᵢₙ, the damping coefficient C increases proportionally, and when the stroke amount reaches Smax, the damping coefficient C reaches a maximum. The reason for this is that the viscosity of the magnetorheological fluid in the annular interval between the piston 21 and the cylinder 10 gradually increases. Moreover, as the piston 21 advances to the inner peripheral side of the magnet portion 30 where the effect of the magnetic field is large, a length of the annular interval between the piston 21 and the cylinder 10 that is directly affected by the magnetic field gradually increases.

By disposing the magnet portion 30 in the position corresponding to the position of the piston 21 when the piston rod 22 is furthest advanced into the cylinder 10 in this manner, the damping coefficient C of the magnetorheological fluid shock absorber 100 can be increased proportionally relative to the stroke amount of the piston rod 22 in the advancement direction into the cylinder 10.

With the first embodiment described above, following effects are obtained.

The cylinder 10 and the piston 21 are formed from a non-magnetic material, and the magnet portion 30 that applies a magnetic field to the magnetorheological fluid in the cylinder 10 is attached to the cylinder 10. Hence, the cylinder 10 and the piston 21 do not form a magnetic path, and therefore the effect of the magnetic field on the magnetorheological fluid passing through the interval between the cylinder 10 and the piston 21 increases gradually as the piston 21 strokes toward the magnet portion 30. As a result, the damping coefficient can be varied continuously relative to the stroke amount of the piston 21.

Further, the magnet portion 30 includes the pair of permanent magnets 31 having an inner peripheral shape that aligns with the outer peripheral shape of the cylindrical cylinder 10 in which the magnetorheological fluid is sealed. The pair of permanent magnets 31 are disposed such that **the magnetic poles of the pair of permanent magnets 31 respectively oppose opposite poles.**- Hence, the magnetic field generated by the pair of permanent magnets 31 acts in a direction following an outer wall of the piston 21, and as a result, the magnetic field can be applied to the magnetorheological fluid efficiently.

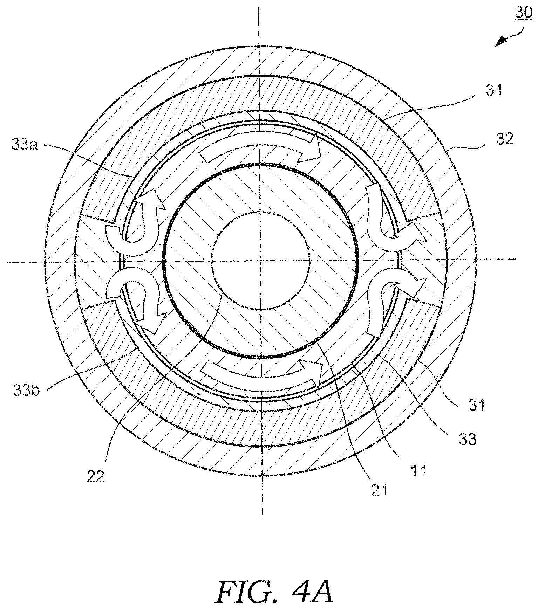

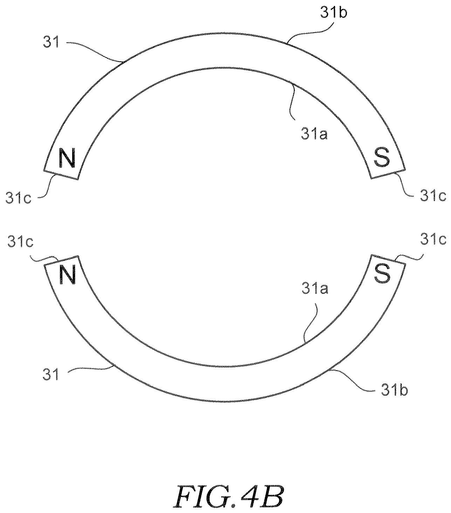

Next, referring to FIGS. 4A and 4B, a second embodiment of this invention will be described. It should be noted that in the second embodiment, identical configurations to the first embodiment have been allocated identical reference symbols, and duplicate description thereof has been omitted where appropriate. FIG. 4A is a sectional view of the cylinder 10 and the magnet portion 30 in a magnetorheological fluid shock absorber according to the second embodiment of this invention, and FIG. 4B is a view illustrating the permanent magnets 31 of the magnetorheological fluid shock absorber according to the second embodiment of this invention.

The magnetorheological fluid shock absorber according to the second embodiment has an identical overall basic configuration to the magnetorheological fluid shock absorber 100 according to the first embodiment, shown in FIG. 1. The magnetorheological fluid shock absorber according to the second embodiment differs from the magnetorheological fluid shock absorber 100 according to the first embodiment only in the configuration of the magnet portion 30.

The magnet portion 30, similarly to the first embodiment shown in FIG. 2, is constituted by the pair of permanent magnets 31, the support member 33 supporting the permanent magnets 31, and the annular ring member 32 fitted around the permanent magnets 31 and the support member 33.

Each permanent magnet 31 is a C-shaped segment magnet. The pair of permanent magnets 31 are formed in an identical shape and disposed so that the magnetic poles of the pair of permanent magnets (31) respectively oppose identical poles.

In the second embodiment, the permanent magnets 31 are magnetized by groups of magnetic poles in the circumferential direction, as shown in FIG. 4B. In the example shown in FIG. 4B, one side portion 31c in the circumferential direction is magnetized to an N pole, and the other side portion 31c is magnetized to an S pole. Further, one permanent magnet 31 and the other permanent magnet 31 are respectively disposed so that the magnetic poles of the pair of permanent magnets 31 respectively oppose identical poles. In other words, the magnetic pole in one side portion 31c of one permanent magnet 31 is an N pole, and the magnetic pole in the same side portion 31c of the opposing permanent magnet 31 is also an N pole. Further, the magnetic pole in the other side portion 31c of the first permanent magnet 31 is an S pole, and the magnetic pole in the same side portion 31c of the opposing permanent magnet 31 is also an S pole.

With this configuration, the magnet portion 30 generates a magnetic field in the direction of an arrow shown in FIG. 4A. In other words, by combining the magnetic poles of the pair of permanent magnets 31, a magnetic field is generated in a direction following the outer edge of the cylinder 10. The magnetic field is applied evenly over the magnetorheological fluid existing in the interval between the piston 21 and the cylinder 10, and as a result, the viscosity of the magnetorheological fluid can be increased.

In the vicinity of the side portions 31c of the permanent magnets 31 in particular, mutually repellent magnetic poles are disposed, and therefore a large magnetic field is generated in mutually repellent directions. As a result, the viscosity of the magnetorheological fluid can be increased.

Hence, in the second embodiment of this invention, similarly to the first embodiment, the damping coefficient can be varied continuously relative to the stroke amount of the piston 21.

Further, in the second embodiment of this invention, the pair of permanent magnets 31 are disposed such that identical magnetic poles oppose each other. Therefore, a strongly repellent magnetic field is generated by the opposing magnetic poles in the vicinity of the side portions 31c. As a result, the magnetic field can be applied to the magnetorheological fluid even more effectively.

Although the invention has been described above with reference to certain embodiments, the invention is not limited to the embodiments described above. Modifications and variations of the embodiments described above will occur to those skilled in the art, within the scope of the claims.

The embodiments of this invention in which an exclusive property or privilege is claimed are defined as follows:

## Claims

1. A magnetorheological fluid shock absorber that uses a magnetorheological fluid having a viscosity that is varied by an action of a magnetic field, comprising:
a tubular cylinder (10) formed from a non-magnetic material, in which the magnetorheological fluid is sealed;
a piston (21) formed from a non-magnetic material and disposed in the cylinder (10) to be free to slide at an interval, through which the magnetorheological fluid can pass, relative to an inner periphery of the cylinder (10);
a piston rod (22) to which the piston (21) is connected; and
a magnet portion (30) attached to the cylinder (10) in order to apply a magnetic field to an interior of the cylinder (10),
wherein the magnet portion (30) comprises a pair of permanent magnets (31) that are respectively formed in an arc shape having an inner peripheral shape that aligns with an outer periphery of the cylinder (10), magnetized in a circumferential direction, and disposed so as to face each other with a clearance about a central axis of the cylinder (10), and
the magnetorheological fluid shock absorber (100) further comprises a support member (33) formed from a non-magnetic material, the support member (33) supporting and fixing the pair of permanent magnets (31) so that the pair of permanent magnets (31) faces each other with the clearance.

2. The magnetorheological fluid shock absorber as defined in Claim 1, wherein the magnet portion (30) is disposed to correspond to a position of the piston (21) when the piston rod (22) is furthest advanced into the cylinder (10).

3. The magnetorheological fluid shock absorber as defined in Claim 1, wherein the pair of permanent magnets (31) are disposed so that the magnetic poles of the pair of permanent magnets (31) respectively oppose opposite poles.

4. The magnetorheological fluid shock absorber as defined in Claim 1, wherein the pair of permanent magnets (31) are disposed so that the magnetic poles of the pair of permanent magnets (31) respectively oppose identical poles.

5. The magnetorheological fluid shock absorber as defined in Claim 1, wherein the magnet portion (30) comprises a ring-shaped ring member (32) formed from a non-magnetic material and fitted around the permanent magnets (31).

## Patentansprüche

1. Stoßdämpfer mit magnetorheologischer Flüssigkeit, bei dem eine magnetorheologische Flüssigkeit eingesetzt wird, die eine Viskosität hat, die durch eine Wirkung eines Magnetfeldes verändert wird, wobei er umfasst:
einen röhrenförmigen Zylinder (10), der aus einem nichtmagnetischen Material besteht und in dem die magnetorheologische Flüssigkeit eingeschlossen ist;
einen Kolben (21), der aus einem nichtmagnetischen Material besteht und in dem Zylinder (10) so angeordnet ist, dass er mit einem Zwischenraum, durch den die magnetorheologische Flüssigkeit hindurchtreten kann, relativ zu einem Innenumfang des Zylinders (10) ungehindert gleiten kann;
eine Kolbenstange (22), mit der der Kolben (21) verbunden ist; und
einen Magnet-Abschnitt (30), der an dem Zylinder (10) angebracht ist, um ein Magnetfeld auf einen Innenraum des Zylinders (10) wirken zu lassen,
wobei der Magnet-Abschnitt (30) ein Paar Permanentmagneten (31) umfasst, die jeweils in einer Bogen-Form ausgebildet sind, die eine Innenumfangs-Form hat, die an einen Außenumfang des Zylinders (10) angepasst ist, die in einer Umfangsrichtung magnetisiert und so angeordnet sind, dass sie einander mit einem Abstand um eine Mittelachse des Zylinders (10) herum zugewandt sind, und
der Stoßdämpfer (100) mit magnetorheologischer Flüssigkeit des Weiteren ein Trage-Element (33) umfasst, das aus einem nichtmagnetischen Material besteht, wobei das Trageelement (33) die paarigen Permanentmagneten (31) so trägt und fixiert, dass die paarigen Permanentmagneten (31) einander mit dem Abstand zugewandt sind.

2. Stoßdämpfer mit magnetorheologischer Flüssigkeit nach Anspruch 1, wobei der Magnet-Abschnitt (30) so angeordnet ist, dass er einer Position des Kolbens (21) entspricht, wenn die Kolbenstange (22) am weitesten in den Zylinder (10) hinein eingefahren ist.

3. Stoßdämpfer mit magnetorheologischer Flüssigkeit nach Anspruch 1, wobei die paarigen Permanentmagneten (31) so angeordnet sind, dass die Magnetpole der paarigen Permanentmagneten (31) jeweils entgegengesetzten Polen gegenüberliegen.

4. Stoßdämpfer mit magnetorheologischer Flüssigkeit nach Anspruch 1, wobei die paarigen Permanentmagneten (31) so angeordnet sind, dass die Magnetpole der paarigen Permanentmagneten (31) jeweils identischen Polen gegenüberliegen.

5. Stoßdämpfer mit magnetorheologischer Flüssigkeit nach Anspruch 1, wobei der Magnet-Abschnitt (30) ein ringförmiges Ring-Element (32) umfasst, das aus einem nichtmagnetischen Material besteht und um die Permanentmagneten (31) herum aufgepasst ist.

## Revendications

1. Amortisseur à fluide magnétorhéologique qui utilise un fluide magnétorhéologique ayant une viscosité qui est modifiée par une action d'un champ magnétique, comprenant :
un cylindre tubulaire (10) formé à partir d'un matériau non-magnétique, dans lequel le fluide magnétorhéologique est scellé ;
un piston (21) formé à partir d'un matériau non-magnétique et disposé dans le cylindre (10) pour pouvoir coulisser librement à un intervalle, à travers lequel le fluide magnétorhéologique peut passer, par rapport à une périphérie interne du cylindre (10) ;
une tige de piston (22) à laquelle le piston (21) est connecté ; et
une partie magnétique (30) fixée au cylindre (10) afin d'appliquer un champ magnétique à un intérieur du cylindre (10),
dans lequel la partie magnétique (30) comprend une paire d'aimants permanents (31) qui sont respectivement formés en une forme d'arc ayant une forme périphérique interne qui s'aligne avec une périphérie extérieure du cylindre (10), aimantés dans une direction circonférentielle, et disposés de manière à se faire face avec un jeu autour d'un axe central du cylindre (10), et
l'amortisseur à fluide magnétorhéologique (100) comprend en outre un élément de support (33) formé à partir d'un matériau non-magnétique, l'élément de support (33) supportant et fixant la paire d'aimants permanents (31) de telle sorte que la paire d'aimants permanents (31) fait face au jeu.

2. Amortisseur à fluide magnétorhéologique selon la revendication 1, dans lequel la partie magnétique (30) est disposée pour correspondre à une position du piston (21) lorsque la tige de piston (22) est la plus avancée dans le cylindre (10).

3. Amortisseur à fluide magnétorhéologique selon la revendication 1, dans lequel la paire d'aimants permanents (31) est disposée de sorte que les pôles magnétiques de la paire d'aimants permanents (31) s'opposent respectivement à des pôles opposés.

4. Amortisseur à fluide magnétorhéologique selon la revendication 1, dans lequel la paire d'aimants permanents (31) est disposée de sorte que les pôles magnétiques de la paire d'aimants permanents (31) s'opposent respectivement à des pôles identiques.

5. Amortisseur à fluide magnétorhéologique selon la revendication 1, dans lequel la partie magnétique (30) comprend un élément annulaire en forme d'anneau (32) formé à partir d'un matériau non-magnétique et ajusté autour des aimants permanents (31).
